# EUROPÄISCHE PATENTSCHRIFT

(11) **EP 1 119 727 B1**
(45) Veröffentlichungstag und Bekanntmachung des Hinweises auf die Patenterteilung: **06.05.2004**
(21) Anmeldenummer: 99953770.7
(22) Anmeldetag: 11.10.1999
(51) Int. Cl.: F16M 11/04

(54) **VORRICHTUNG ZUR BEFESTIGUNG EINER AUFHÄNGEEINRICHTUNG AN EINEM TRÄGER, INSBESONDERE AN EINER RAUMDECKE**
DEVICE FOR FASTENING A SUSPENSION DEVICE TO A SUPPORT, ESPECIALLY TO A CEILING
DISPOSITIF POUR FIXER SUR UN SUPPORT, NOTAMMENT A UN PLAFOND, UN DISPOSITIF SUSPENDU

(30) Priorität: 09.10.1998 DE 29818108 U
(43) Veröffentlichungstag der Anmeldung: 01.08.2001
(73) Patentinhaber: Mavig GmbH, 81829 München (DE)
(72) Erfinder: KUHN, Peter, D-81545 München (DE)
(74) Vertreter: Körfer, Thomas, Dipl.-Phys.
(86) Internationale Anmeldenummer: PCT/EP1999/007603
(87) Internationale Veröffentlichungsnummer: WO 2000/022342

(56) Entgegenhaltungen:
- DE-U- 29 818 108
- GB-A- 2 200 491
- US-A- 4 964 606
- US-A- 5 405 117
- US-A- 5 937 073

## Beschreibung

Die Erfindung bezieht sich auf eine Vorrichtung nach dem Oberbegriff des Anspruchs 1.

Eine Aufhängeeinrichtung dieser Art ist in der US 4 964 606 A beschrieben, und sie dient dazu, Gebrauchsgegenstände in aufgehängten Gebrauchsstellungen im Bereich von Arbeitsplätzen bereitzuhalten. Bevorzugte Verwendungen für eine vorliegende Aufhängeeinrichtung sind medizinische Behandlungsplätze in ärztlichen Praxen und Kliniken sowie medizinisch-technische Arbeitsplätze in medizinischen Labors. Gebrauchsgegenstände, die mit einer Aufhängeeinrichtung bereitgestellt werden können, können z. B. Röntgenabschirmungen, Meßgeräte, Bildwiedergabegeräte (Monitore), Ablageteile für Arbeits- oder Behandlungswerkzeuge und dergleichen sein.

Die bekannte Vorrichtung zur Befestigung der Aufhängeeinrichtung an einem Träger umfaßt Befestigungsmittel, insbesondere Schrauben, mit denen ein Flansch am oberen Ende einer Aufhängeeinrichtung mit einem z. B. eine Raumdecke bildenden Träger befestigbar ist.

In der GB 2 200 491 A sind zwei Vorrichtungen zur Befestigung einer Aufhängeeinrichtung an einem Träger beschrieben, jeweils mit einem an den Träger anbringbaren Flansch, mit dem ein Stativrohr durch ein Gelenk mit einem Gelenkbolzen schwenkbar verbunden ist. Das Stativrohr erstreckt sich durch einen vertikalen Abschnitt eines U-förmigen Rahmens, der durch eine Klemmvorrichtung mit dem Stativrohr verklemmt ist. Zur zusätzlichen Sicherung der Aufhängeeinrichtung ist ein Sicherungskabel vorgesehen, dessen Enden jeweils mit einer Schlaufe auf den zugehörigen Gelenkbolzen befestigt sind, und das sich durchgehend durch die Stativrohre, die vertikalen Rahmenabschnitte und den unteren horizontalen Rahmenabschnitt des U-förmigen Rahmens erstreckt.

Eine vorliegende Aufhängeeinrichtung wird im normalen Benutzungsfall hauptsächlich nur auf Zug beansprucht und nur in weit geringerem Maße bezüglich der Zugrichtung quer gerichteten Kräften belastet, die durch die Gewichtskräfte der Gebrauchsgegenstände hervorgerufen werden, welche in den meisten Fällen an sich etwa horizontal erstreckenden Tragarmen angeordnet sind, die durch Schwenklager mit einem Ausleger am unteren Ende eines Stativrohrs verbunden sind. Da diese am Flansch wirksamen Drehmomentkräfte verhältnismäßig klein sind, werden der Flansch und ein sich von diesen nach unten erstreckendes Stativrohr mit verhältnismäßig kleinen horizontalen Querschnittsgrößen hergestellt.

Eine vorliegende Vorrichtung zur Befestigung einer Aufhängeeinrichtung kann jedoch verhältnismäßig leicht überlastet werden. Dies ist insbesondere dann der Fall, wenn die Aufhängeeinrichtung zusätzlich mit horizontalen Kräften belastet wird. Ein denkbarer Belastungsfall mit der Gefahr einer unbeabsichtigten Lösung der Befestigung zwischen dem Flansch und dem Träger kann z. B. dann passieren, wenn mit einem Transportwagen gegen die Aufhängeeinrichtung gefahren wird. Bei einer solchen Überbelastungbesteht die Gefahr, daß die Flanschbefestigung gelöst oder aus dem Träger herausgerissen wird und die Aufhängeeinrichtung herunterfällt, wodurch nicht nur ein großer Schaden an den Gebrauchsgegenständen sondern auch ein großer Personenschaden entstehen kann.

Der Erfindung liegt die Aufgabe zugrunde, bei einer Vorrichtung der vorliegenden Art die Befestigungssicherheit zu verbessern.

Diese Aufgabe wird durch die Merkmale des Anspruchs 1 gelöst.

Bei der erfindungsgemäßen Vorrichtung ist ein Verankerungselement vorgesehen, das zusätzlich zu dem Flansch und unabhängig von dem Flansch am Träger anbringbar ist. Außerdem ist ein längliches Sicherungselement vorgesehen, das mit dem Verankerungselement verbunden ist, sich durch das Stativrohr bis zum Ausleger erstreckt und damit verbunden ist.

Das zusätzliche Sicherungselement ist von einer so großen Zugfestigkeit, daß bei einer Beschädigung oder bei einem Ausfall der zwischen dem Flansch und dem Träger wirksamen Befestigungselemente das Sicherungselement die Aufhängeeinrichtung am Träger zu halten vermag. Infolgedessen ist die Aufhängeeinrichtung auch bei einem Ausfall der Befestigungselemente des Flansches am Träger gehalten und daran gehindert, herunterzufallen, wenn die ersten, zwischen dem Flansch und dem Träger wirksamen Befestigungselemente unbeabsichtigt gelöst werden, z. B. bei einem eingangs beschriebenen Fahrunfall.

Das erfindungsgemäße Sicherungselement ist so lang bemessen, daß es sich bis in den Bereich des ersten Endes des Stativrohrs erstreckt. In diesem Bereich läßt sich das zusätzliche Verankerungselement mit dem Träger verbinden, wodurch das Sicherungselement in Funktion tritt.

Gemäß Anspruch 2 kann das Sicherungselement auch länger bemessen sein, so daß es den Flansch überragt und an einem höher als der Träger angeordneten Teil oder Anbauteil des Trägers anmontierbar ist. Wenn der Träger z. B. an einer Zwischendecke aufgehängt ist, kann das länger bemessene Sicherungselement sich bis zur Hauptdecke erstrecken und dort verankert sein. Hierdurch ergibt sich ein weiterer Sicherheitsaspekt, da das Sicherungselement auch dann sicher aufgehängt ist, wenn bei einer unbeabsichtigten Überbeanspruchung nicht nur die ersten, zwischen dem Flansch und der Zwischendecke wirksamen Befestigungselemente, sondern auch die Zwischendecke geschädigt und ihrer Tragfunktion beeinträchtigt werden sollte.

Aber auch dann, wenn der Flansch und das Sicherungselement an ein und demselben Träger befestigt werden, ist es vorteilhaft, das Sicherungselement länger zu bemessen, so daß es in der normalen Befestigungsposition nicht unter Zugspannung steht, sondern aufgrund seiner größeren Länge sich in einer Bereitschaftsstellung befindet, wozu sich insbesondere ein flexibles Sicherungselement eignet, dessen wirksame Länge verringerbar ist, und das aufgrund seiner größeren Länge einzuknicken oder durchzuhängen vermag. Bei einer solchen Ausgestaltung tritt bei einer Überlastung und Lösung der Aufhängeeinrichtung das Sicherungselement erst nach dem Absacken der Aufhängeeinrichtung in seine Aufhängefunktion. Dies ist vorteilhaft, weil das Sicherungselement beim Überlastungsvorgang, bei dem die Aufhängeeinrichtung eine Lösebewegung, z. B. eine Kippbewegung, ausführt, das Sicherungselement zunächst unbelastet bleibt, so daß der Belastungsvorgang nicht auch das Sicherungselement zu überlasten vermag. Erst wenn die Aufhängeeinrichtung sich aufgrund der Überlastung aus der Verankerung zwischen dem Flansch und dem Träger löst und dabei bewegt, tritt das Sicherungselement in seine Tragfunktion. Eine Überlastung in Form eines kurzen Stoßes kann somit das Sicherungselement nicht überlasten.

In den Unteransprüchen sind Merkmale enthalten, die die angestrebte Sicherheit weiter verbessern, zu einfachen und sicheren Befestigungsmaßnahmen führen, eine einfache und kostengünstig herstellbare Ausgestaltung ermöglichen und auch eine leichte und schnelle Montage gewährleisten.

Nachfolgend werden die Erfindung und weitere durch sie erzielbare Vorteile anhand eines bevorzugten Ausführungsbeispiels und einer Zeichnung näher beschrieben. Es zeigen
Fig. 1 eine erfindungsgemäße Vorrichtung zur Befestigung einer Aufhängeeinrichtung an einem Träger;
Fig. 2 den unteren Bereich der Aufhängeeinrichtung in perspektivischer Darstellung und mit zusätzlichen Verkleidungsteilen; und
Fig. 3 die Aufhängeeinrichtung in einer Montagezwischenstellung an einer Raumdecke.

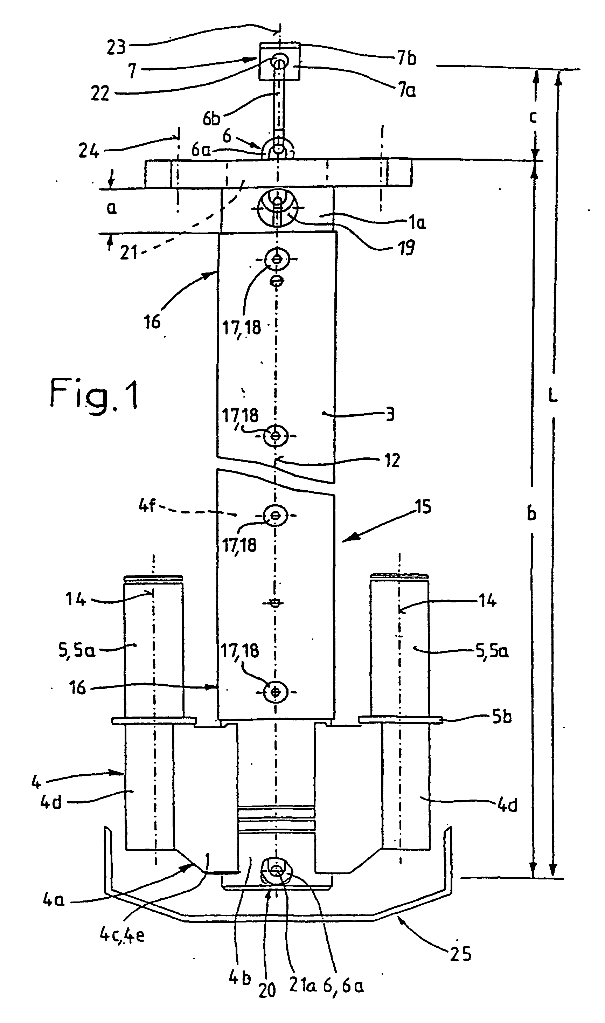

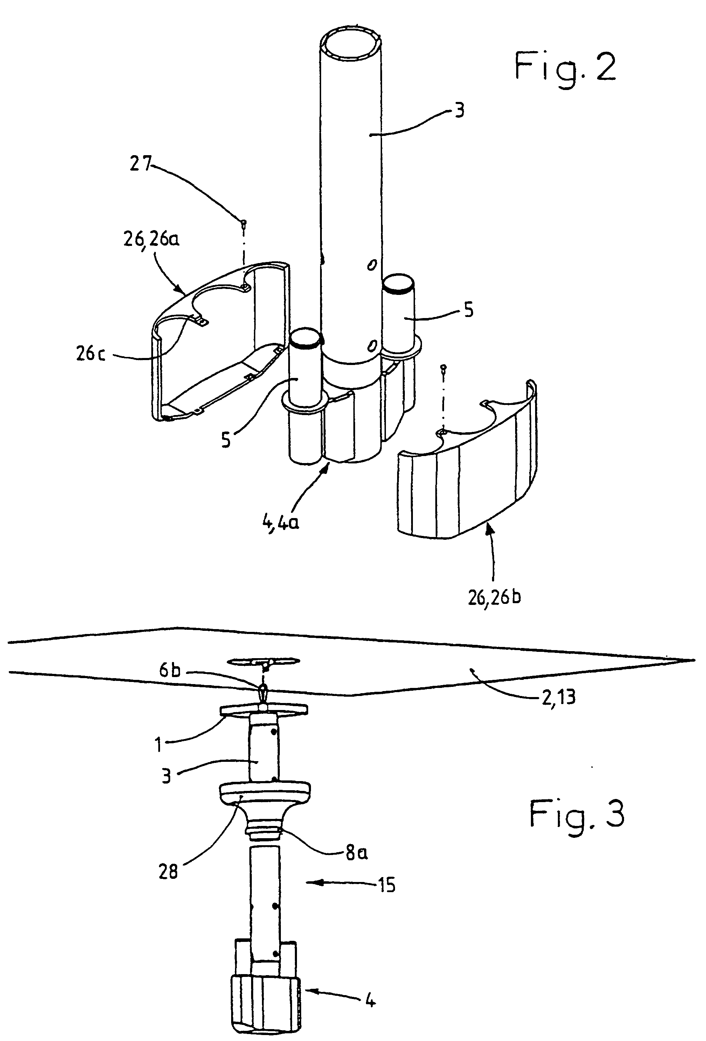

Die Hauptteile der Aufhängeeinrichtung sind ein Flansch 1 zur Befestigung der Aufhängeeinrichtung an einem in Fig. 1 nicht dargestellten Träger, z. B. an einer in Fig. 3 dargestellten Raumdecke 2, ein Stativrohr 3, das sich beim vorliegenden Ausführungsbeispiel vertikal erstreckt und an seinem oberen ersten Ende mit dem Flansch 1 verbunden ist und an seinem unteren zweiten Ende mit einem sich vorzugsweise quer erstreckenden Ausleger 4 verbunden ist, der zumindest ein Schwenklager 5 aufweist, ein längliches Sicherungselement 6 für die Aufhängeeinrichtung, das sich längs durch das Stativrohr 3 erstreckt, und ein zusätzliches Verankerungselement 7 für die Aufhängeeinrichtung am oberen ersten Ende des Sicherungselements 6.

Bei der vorliegenden Ausgestaltung weist der Ausleger 4 zwei Schwenklager 5 auf, die bezüglich der vertikalen Mittelachse 12 des Stativrohrs 3 seitlich versetzt angeordnet sind und vorzugsweise auf einander gegenüberliegenden Seiten des Auslegers 4 angeordnet sind.

Die Aufhängeeinrichtung dient dazu, nicht dargestellte Gebrauchsgegenstände an einem vorzugsweise medizinischen Behandlungs- oder Arbeitsplatz an dem hier durch die Decke gebildeten Träger 13 aufzuhängen und zur Benutzung bereitzuhalten. Die Gebrauchsgegenstände können unmittelbar oder mittels nicht dargestellter Tragarme an den Schwenklagern 5 des Auslegers 4 gelagert sein. Die Lagerung an den Schwenklagern 5 ermöglicht es, die Tragarme und/oder die Gebrauchsgegenstände um die vorzugsweise vertikal verlaufenden Mittelachsen 14 der Schwenklager 5 in unterschiedliche Arbeitsstellungen zu schwenken, wodurch günstige Stellungen bezüglich des Behandlungs- oder Arbeitsplatzes erreichbar sind, z. B. bei einem einen Gebrauchsgegenstand bildenden Monitor eine günstige Stellung bezüglich der Blickrichtung einer sich am Behandlungsplatz befindlichen Person. Andere Beispiele für Gebrauchsgegenstände, die mittels der Aufhängeeinrichtung 1 bereitgehalten werden können, sind eine z. B. transparente Abschirmung gegen Röntgenstrahlung, ein Ablagetisch für Werkzeuge und dergleichen.

Bei der vorliegenden Ausgestaltung ist das bzw. sind die Schwenklager 5 jeweils durch einen sich vom Ausleger 4 nach oben erstreckenden Lagerzapfen 5a gebildet, der sich in seitlichen Abstand neben dem Stativrohr 3 als Teil des Auslegers 4 befindet. Des weiteren weist jeder Ausleger 4 eine Auslegerbasis 4a auf, von der sich die Lagerzapfen 5a nach oben erstrecken. Bei der vorliegenden Ausgestaltung ist die Auslegerbasis 4a mehrteilig ausgebildet, wobei sie durch ein koaxial zur vertikalen Mittelachse 12 angeordnetes Auslegerrohr 4b besteht, das durch seitliche Stege 4c jeweils mit einem unteren Längsabschnitt 4d des zugehörigen Lagerzapfens 5a verbunden ist. Zwecks Vergrößerung der Stabilität kann jeder Steg 4c durch zwei Stegbleche 4e gebildet sein, die sich in einem Abstand voneinander befinden und in tangentialer und/oder sekantialer Anordnung bezüglich des Auslegerrohrs 4b und des zugehörigen Längsabschnitts 4d mit diesen verbunden sind. Bei der vorliegenden Ausgestaltung, bei der die wesentlichen Teile der so weit beschriebenen Aufhängeeinrichtung 15 aus Stahl bestehen, sind die Stegbleche 4e mit dem Auslegerrohr 4b und den Längsabschnitten 4d verschweißt. Vorzugsweise ist jeweils zwischen dem Lagerzapfen 5a und dem Längsabschnitt 4a ein Zapfenbund 5b vorgesehen, an dessen Unterseite der zugehörige Steg 4c zwecks Stabilisierung anliegt.

Der Ausleger 4 weist zu seiner Verbindung mit dem Stativrohr 3 einen von ihm nach oben ragenden Rohrstutzen 4f auf, der durch eine nach oben abstehende Verlängerung des Auslegerrohrs 4b gebildet ist und durch eine Steckverbindung 16 mit dem Stativrohr 3 verbunden sowie durch ein oder mehrere Verriegelungselemente 17 in dieser Verbindung gesichert ist. Bei der vorliegenden Ausgestaltung sind der Rohrstutzen 4f und der zugehörige untere Endabschnitt des Stativrohrs 3 muffenförmig zusammengesteckt, wobei hier das Stativrohr 3 den Rohrstutzen 4f mit geringem Bewegungsspiel übergreift. Ein oder mehrere. einen axialen Abstand voneinander aufweisende Verriegelungselemente 17 können durch Querbolzen in Form von Stiften oder Schrauben 18 gebildet sein, die die Wandungen des Rohrstutzens 4f und des Stativrohrs 3 in jeweils zugehörigen Löchern einseitig oder beidseitig durchsetzen und dabei sich quer durchgehend erstrecken können.

Die Verbindung zwischen dem Stativrohr 3 in seinem oberen ersten Ende mit dem Flansch 1 kann entsprechend der Steckverbindung 16 mit einem z. B. durch Schrauben 18 gebildeten Verriegelungselement 17 in spiegelbildlicher Anordnung ausgebildet sein, wie es insbesondere die Fig. 1 deutlich zeigt. Bei dieser Verbindung ist der vorhandene Rohrstutzen 1a am Flansch 1 befestigt, z. B. verschweißt, wobei er vom Flansch 1 nach unten ragt.

Ein Unterschied zwischen der unteren und der oberen Steckverbindung 16 kann darin bestehen, daß das untere zweite Ende des Stativrohrs 3 sich direkt bis zur Auslegerbasis 4a erstreckt, während das obere Ende des Stativrohrs 3 einen vertikalen Abstand a vom Flansch 1 aufweisen kann, wobei im Bereich dieses Abstandes a ein Querloch 19 im oberen Rohrstutzen 1a angeordnet sein kann, das z. B. dem Einstecken eines Montagehilfsstiftes zur vorübergehenden Positionierung des Sicherungselements 6 dienen kann.

Das Sicherungselement 6 ist ein längliches Bauteil, dessen Länge vorzugsweise verringerbar ist, wobei es z. B. aus einem Band. einem Seil oder einer Kette bestehen kann, die aufgrund ihrer natürlichen Flexibilität in ihrer Länge nachgiebig und verringerbar sind. Das Sicherungselement 6 erstreckt sich längs und vorzugsweise koaxial im Stativrohr 3 und in den Rohrstutzen 1a, 4f, wobei es den Flansch 1 in einem Loch 21 durchfaßt und aufgrund des vorhandenen seitlichen Bewegungsspiels in seiner Länge kontraktierbar ist. Bei der vorliegenden Ausgestaltung besteht das Sicherungselement 6 aus einer Kette, deren Kettenglieder mit 6a bezeichnet sind. Das oberste Kettenglied ist wahlweise zu öffnen und bei der vorliegenden Ausgestaltung durch einen üblichen Karabinerhaken 6b gebildet. Das untere Ende des Sicherungselements 6 ist mit dem Ausleger 4, hier mit dessen Auslegerbasis 4a, verbunden, wobei es mit dem Auslegerrohr 4b vorzugsweise in dessen unterem Endbereich verbunden ist, z. B. mittels eines Querbolzens 21a, der im Auslegerrohr 4b verankert ist, z. B. durch Schweißen oder dadurch, daß der Querbolzen 21a in Querlöchern der Auslegerrohrwandung sitzt. Die so gebildete Befestigungsstelle 2 ist mit 20 bezeichnet. Teil des Sicherungselements 6 kann auch das Verankerungselement 7 sein, bei dem es sich jedoch auch um ein Teil des Trägers 13 handeln kann. Fig. 1 zeigt als Verankerungselement 7 ein winkelförmiges oder T-förmiges Bauteil mit einem Loch 22 im nach unten weisenden Schenkel 7a, in dem der Karabinerhaken 6b sitzt. Ein oder zwei einander gegenüberliegende Stege 7b des Verankerungselements 7 können mittels Löcher in den Stegen 7b durchfassende andeutungsweise dargestellte Befestigungselemente 23, z. B. Schrauben, am Träger 13 verschraubt bzw. verdübelt werden.

Die gestreckte und wirksame Länge L des Sicherungselements 6 ist größer bemessen, als der vertikale Abstand b der Befestigungsstelle 20 von der Anlageseite bzw. Oberseite des Flansches 1, so daß das Sicherungselement 6 den Flansch 1 um das Maß c überragt. Dies ist aus mehreren Gründen vorteilhaft, was noch erklärt wird.

Die Vorrichtung zur Befestigung der Aufhängeeinrichtung 15 am Träger 13 umfaßt somit nicht nur den Flansch 1 und zugehörige, andeutungsweise dargestellte Befestigungselemente 24, z. B. Befestigungsschrauben, die den Flansch 1 in Löchern durchfassen und in den Träger 13 einfassen, sondern die Vorrichtung umfaßt auch das Sicherungselement 6 und dessen unterseitige und oberseitige Befestigung, hier das Verankerungselement 7 und eventuell vorhandene, zugehörige Befestigungselemente 23.

Die wirksame Länge L des Sicherungselements 6 ist vorzugsweise so groß bemessen, daß bei einer Aufhängung der Aufhängeeinrichtung 15 allein mit dem Sicherungselement 6 am Träger 13 ein vertikaler Abstand c zwischen dem Träger 13 und dem Flansch 1 besteht. Ein erster Vorteil dieser Ausgestaltung ist darin zu sehen, daß es möglich ist, während der Anbringung der Aufhängeeinrichtung 15 am Träger 13 die Aufhängeeinrichtung 15 zunächst zentral mit dem Sicherungselement 6, z. B. durch Einhängen des Karabinerhakens 6b im vorher befestigten Verankerungselement 7 erfolgen kann. Danach kann in handhabungsfreundlicher Weise der Flansch 1 mit den zugehörigen Befestigungselementen 24 am Träger 13 befestigt und dabei um ein sich ergebendes Maß angehoben werden.

Ein anderer bedeutender Vorteil der Überlänge des Sicherungselements 6 besteht darin, daß letzteres in der endgültigen Befestigunesposition der Vorrichtung bzw. der Aufhängeeinrichtung 15 von Belastungen freigestellt ist, die die Aufhängeeinrichtung 15 aus ihrer Befestigung am Träger 13 zu lösen suchen. Wenn z. B. die Aufhängeeinrichtung 15 quer überlastet wird, was z. B. dann passieren kann, wenn mit einem Wagen gegen die Aufhängeeinrichtung 15 gefahren wird, besteht die Gefahr, daß die Befestigungselemente 24 aus ihrer Verankerung am Träger 13 gerissen werden, wodurch die Aufhängeeinrichtung 15 herunterfallen würde und die eingangs beschriebenen Sach- und Personenschäden eintreten könnten. Bei einer solchen Überlastung erweist sich das Sicherungselement 6 mit den zugehörigen Befestigungselementen als zusätzliche Sicherungseinrichtung, die die Aufhängeeinrichtung 15 abfängt und deren Herabfallen verhindert. Wenn das Sicherungselement 6 Überlänge hat, ist es darüber hinaus auch bei einer Kippbewegung des Stativrohrs 3 von der Überlastung freigestellt. Beim Fehlen einer Überlänge führt das Vorhandensein des zusätzlichen Sicherungselements 6 zu einer Stabilisierung der Befestigung.

In den Fig. 1 und 2 sind zusätzlich Verkleidungsteile zur Verkleidung des Auslegerkörpers 4a dargestellt. Fig. 1 zeigt eine Verkleidungskappe 25, die von unten auf den Auslegerkörper 4a aufsteckbar und fixierbar ist, z. B. durch Klemmwirkung oder durch wenigstens eine nicht dargestellte Schraube.

Fig. 2 zeigt ein Verkleidungsgehäuse 26 in Form von zwei Gehäuse-Halbschalen 26a, 26b, die durch Arretierelemente miteinander verbindbar sind, z. B. mittels Schrauben 27, die ineinander übergreifende Wandteile einschraubbar sind. Bei der vorliegenden Ausgestaltung verläuft die Teilungsfuge zwischen den Halbschalen 26a, 26b aufrecht, wobei letztere Querzungen 26c aufweisen, die den Auslegerkörper 4a zwischen den Lagerzapfen 5a und dem Rohrstutzen 4f übergreifen.

In Fig. 3 ist zusätzlich ein Verkleidungsteil 28 dargestellt, das in Form einer Rosette bzw. einer Ringblende auf dem Stativrohr 3 vertikal verschiebbar und in seiner oberen Verkleidungsstellung durch ein Arretierelement 8a am Stativrohr 3 arretierbar ist.

Fig. 3 zeigt die Aufhängeeinrichtung 15 in einer Montagezwischenstellung, wobei jedoch der Karabinerhaken 6b bezüglich seiner vorherigen Stellung um 180° gedreht worden ist, so daß sein größerer Bogen nach oben weist. Diese Verdrehung erfolgt vorzugsweise nach dem Einhängen des Karabinerhakens.

## Patentansprüche

1. Vorrichtung zur Befestigung einer Aufhängeeinrichtung (15) an einem Träger (13), insbesondere einer Raumdecke (2), mit einem an den Träger (13) anbringbaren Flansch (1), einem mit dem Flansch (1) an einem ersten Ende verbundenen Stativrohr (3), einem mit dem dem ersten Ende gegenüberliegenden zweiten Ende des Stativrohrs (3) verbundenen Ausleger (4), an dem zumindest ein Schwenklager (5) vorgesehen ist,
**gekennzeichnet durch**
ein Verankerungselement (7), das zusätzlich zu dem Flansch (1) und unabhängig von dem Flansch (1) am Träger (13) anbringbar ist, und einem sich von dem Verankerungselement (7) bis zu dem Ausleger (4) **durch** das Stativrohr (3) hindurch erstreckenden länglichen Sicherungselement (6), das an einer Befestigungsstelle (20) am Ausleger (4) befestigt ist und mit dem Verankerungselement (7) verbunden ist.

2. Vorrichtung nach Anspruch 1,
**dadurch gekennzeichnet,**
**daß** die wirksame Länge (L) des Sicherungselements (6) größer ist, als der Abstand (b) der Befestigungsstelle (20) des Sicherungselements (6) von der Oberseite des Flansches (1).

3. Vorrichtung nach Anspruch 1 oder 2,
**dadurch gekennzeichnet,**
**daß** die Länge (L) des Sicherungselements (6) verringerbar ist.

4. Vorrichtung nach einem der vorherigen Ansprüche,
**dadurch gekennzeichnet,**
**daß** das Sicherungselement (6) durch ein Band, ein Seil, eine Kette oder eine Teleskopstange gebildet ist.

5. Vorrichtung nach einem der vorherigen Ansprüche,
**dadurch gekennzeichnet,**
**daß** das Sicherungselement (6) an seinem dem Ausleger (4) abgewandten Ende einen Karabinerhaken (6b) aufweist.

6. Vorrichtung nach einem der vorherigen Ansprüche,
**dadurch gekennzeichnet,**
**daß** das Stativrohr (3) an seinem ersten und/oder zweiten Ende durch eine Steckverbindung (16) mit dem Flansch (1) bzw. dem Ausleger (4) verbunden und durch ein Verriegelungselement (17) gesichert ist.

7. Vorrichtung nach Anspruch 6,
**dadurch gekennzeichnet,**
**daß** das Stativrohr (3) an seinem ersten und/oder zweiten Ende muffenförmig mit einem Rohrstutzen (1a bzw. 4t) verbunden ist, der vom Flansch (1) nach unten ragt bzw. vom Ausleger (4) nach oben ragt, und jeweils durch einen das Stativrohr (3) und den Rohrstutzen (8, 9) in Querlöchern durchfassenden Verriegelungsstift oder eine Schraube (18) gesichert ist.

8. Vorrichtung nach einem der vorherigen Ansprüche,
**dadurch gekennzeichnet,**
**daß** der Ausleger (4) ein zentrales vertikales Loch aufweist und das Sicherungselement (6) sich in das Loch hinein erstreckt und darin am Ausleger (4) befestigt ist.

9. Vorrichtung nach Anspruch 8,
**dadurch gekennzeichnet,**
**daß** das Loch durch ein Rohr (4b) gebildet ist.

10. Vorrichtung nach Anspruch 8 oder 9,
**dadurch gekennzeichnet,**
**daß** im Loch ein Querstift (21) angeordnet ist, mit dem das Sicherungselement (6) verbunden ist.

## Claims

1. Device for fastening a suspension arrangement (15) to a carrier (13), in particular the ceiling (2) of a room, the said device having: a flange (1) which can be attached to the carrier (13); a support tube (3) which is connected at one, first end, to the flange (1); a bracket (4) which is connected to the second end, which is located oppositely to the first end, of the support tube (3), and on which bracket (4) at least one pivot bearing (5) is provided; an anchoring element (7) which can be attached, in addition to the flange (1) and independently of the latter, to the carrier (13); and an elongated securing element (6) which extends through the support tube (3) from the anchoring element (7) as far as the bracket (4) and which is fastened to the said bracket (4) at a fastening point (20) and is connected to the said anchoring element (7).

2. Device according to claim 1,
**characterised in that**
the effective length (L) of the securing element (6) is greater than the distance (b) between the fastening point (20) of the said securing element (6) and the upper side of the flange (1).

3. Device according to claim 1 or 2,
**characterised in that**
the length (L) of the securing element (6) is reducible.

4. Device according to one of the preceding claims,
**characterised in that**
the securing element (6) is constituted by a strap, a cable, a chain or a telescopic bar.

5. Device according to one of the preceding claims,
**characterised in that**
the securing element (6) has a snap hook (6b) at its end which faces away from the bracket (4).

6. Device according to one of the preceding claims,
**characterised in that**
the support tube (3) is connected, at its first and/or second end, to the flange (1) or the bracket (4) as the case may be, by a plug-in connection (16), and is secured by a locking element (17).

7. Device according to claim 6,
**characterised in that**
the support tube (3) is connected in a sleeve-like manner, at its first and/or second end, to a tubular connecting piece (1a or 4f as the case may be) which projects downwards from the flange (1) or upwards from the bracket (4) as the case may be, and is secured, in each case, by a locking pin or a screw (18) which reaches through the support tube (3) and the tubular connecting piece (8, 9) within transverse holes.

8. Device according to one of the preceding claims,
**characterised in that**
the bracket (4) has a central vertical hole and the securing element (6) extends into the said hole and is fastened therein to the said bracket (4).

9. Device according to claim 8,
**characterised in that**
the hole is constituted by a tube (4b).

10. Device according to claim 8 or 9,
**characterised in that**
a transverse pin (21), to which the securing element (6) is connected, is disposed in the hole.

## Revendications

1. Dispositif pour la fixation d'un appareil de suspension (15) sur un support (13), en particulier sur un plafond (2), comprenant une bride (1) susceptible d'être appliquée contre le support (13), un tube formant pied (3) relié à une première extrémité à la bride (1), un bras (4) relié à la seconde extrémité, opposée à la première extrémité, du tube formant pied (3) et sur lequel est prévu au moins un palier de pivotement (5),
**caractérisé par** un élément d'ancrage (7) qui peut être monté sur le support (13) en supplément de la bride (1) et indépendamment de la bride (1), et par un élément de blocage (6) allongé s'étendant depuis l'élément d'ancrage (7) jusqu'au bras (4) en traversant le tube formant pied (3), ledit élément de blocage étant fixé au bras (4) à un emplacement de fixation (20) et étant relié à l'élément d'ancrage (7).

2. Dispositif selon la revendication 1, **caractérisé en ce que** la longueur efficace (L) de l'élément de blocage (6) est supérieure à la distance (b) de l'emplacement de fixation (20) de l'élément de blocage (6) depuis la face supérieure de la bride (1).

3. Dispositif selon l'une ou l'autre des revendications 1 et 2, **caractérisé en ce que** la longueur (L) de l'élément de blocage (6) peut être réduite.

4. Dispositif selon l'une des revendications précédentes, **caractérisé en ce que** l'élément de blocage (6) est formé par une bande, un câble, une chaîne, ou une barre télescopique.

5. Dispositif selon l'une des revendications précédentes, **caractérisé en ce que** l'élément de blocage (6) comporte un crochet de mousqueton (6b) à son extrémité opposée au bras (4).

6. Dispositif selon l'une des revendications précédentes, **caractérisé en ce que** le tube formant pied (3) est relié à la bride (1) ou au bras (4) par une jonction à enfichage (16) à sa première et/ou à sa seconde extrémité, et est bloqué par un élément de verrouillage (17).

7. Dispositif selon la revendication 6, **caractérisé en ce que** le tube formant pied (3) est relié à la manière d'un manchon à sa première extrémité et/ou à sa seconde extrémité à un moignon de tube (1a, ou 4f) qui s'étend vers le bas depuis la bride (1) ou qui s'étend vers le haut depuis le bras (4), et est bloqué respectivement par une tige de verrouillage ou par une vis (18) qui traverse le tube formant pied (3) et le moignon de tube (8, 9) dans des trous transversaux.

8. Dispositif selon l'une des revendications précédentes, **caractérisé en ce que** le bras (4) comporte un trou vertical central, et **en ce que** l'élément de blocage (6) s'étend à l'intérieur du trou et est fixé au bras (4) dans ce trou.

9. Dispositif selon la revendication 8, **caractérisé en ce que** le trou est formé à travers un tube (4b).

10. Dispositif selon l'une ou l'autre des revendications 8 et 9, **caractérisé en ce que** dans le trou est disposée une tige transversale (21) à laquelle est relié l'élément de blocage (6).
